# EUROPEAN PATENT SPECIFICATION

(11) **EP 1 855 332 B1**
(45) Date of publication and mention of the grant of the patent: **28.04.2010**
(21) Application number: 07009526.0
(22) Date of filing: 11.05.2007
(51) Int. Cl.: H01M 2/10

(54) **Battery pack for electric tool**
Batteriepack für elektrische Werkzeuge
Bloc-batteries pour outil électrique

(30) Priority: 11.05.2006 JP 2006132520
(43) Date of publication of application: 14.11.2007
(73) Proprietor: HITACHI KOKI CO., LTD., Tokyo 108-6020 (JP)
(72) Inventor: Mizoguchi, Toshio, Hitachinaka-shi Ibaraki 312-8502 (JP)
(74) Representative: Strehl Schübel-Hopf & Partner

(56) References cited:
- EP-A- 1 030 388
- DE-U1- 20 023 629
- JP-A- 2000 277 073

## Description

### BACKGROUND OF THE INVENTION

The present invention relates to a battery pack capable of storing a plurality of battery cells for an electric tool.

In an electric tool, a battery pack is detachably mounted to the tool body for supplying electric power to an electric motor housed in the tool body. The battery pack includes a battery case composed of upper and lower cases, and a separator disposed in the battery case for storing in the battery case a plurality of battery cells juxtaposed side by side in two horizontal rows overlapped with each other in a vertical direction. Further, a circuit board held by a board holder is accommodated in the upper case.

Further, various sizes of battery cells are used in such a battery pack. Therefore, a plurality of battery cases are prepared according to the sizes of battery cells to be used. Japanese Patent Application Publication No. 2000-277073and DE 2002 3629disclose a battery storage structure capable of storing a plurality of kinds of batteries in an electric equipment such as a flashlight using a plurality of batteries.

As described above, a plurality of battery cases are prepared for a battery pack for electric tool according to the sizes of battery cells to be used. Therefore, when a size of a battery cell is changed, a battery case should also be changed. Accordingly, it has not been easy to freely select a battery cell of desired size in accordance with the price fluctuation of battery calls and preference of the user.

Moreover, in the conventional battery pack for electric tool, a plurality of rows of battery cells are regularly arrayed and stacked in the battery case, and a circuit board is disposed on the stack of battery cells. Thus, the height of the battery case becomes inevitably large, resulting in a bulky battery pack. In addition, in the battery storage structure described in the Japanese Patent Application Publication, the same number of one of different size batteries, such as one of size D batteries, size C batteries, and size AA batteries are selectively stored in a common case. Therefore, the size of the battery case must be in conformance with the largest size batteries. Consequently, a bulky battery case is required.

### SUMMARY OF THE INVENTION

It is therefore, an object of the present invention to provide a battery pack for an electric tool capable of selectively receiving one of a plurality of kinds of plurality of battery cells, the plurality of kinds having a battery cell size different from one another.

Another object of the present invention is to provide a compact battery pack for an electric tool, the battery pack having battery case with a reduced height.

These and other objects of the present invention will be attained by a battery pack for use in combination with an electric tool having a tool body, the battery pack being detachably attached to the tool body. The battery pack includes a first case, a complementary second case, a separator, and a board holder. The complementary second case provides a battery case in combination with the first case. The battery case defines an upper space and a battery cell accommodation space below the upper space. The separator is disposed in the battery cell accommodation space to package a plurality of battery cells in a form of at least a first horizontal cell array and a second horizontal cell array stacked on the first horizontal cell array. The board holder holds a circuit board and is disposed in the upper space. The board holder has a first retainer capable of fitting with an outer peripheral part of a small size battery cell and a second retainer capable of fitting with an outer peripheral part of a large size battery cell.

In another aspect of the invention, there is provided a battery pack for use in combination with an electric tool having a tool body, the battery pack being detachably attached to the tool body. The battery pack includes the first case, the complementary second case, the separator, and the board holder. The battery case has an interior horizontal bottom surface defining a part of the battery cell accommodation space. A first one of the battery cells is positioned below the board holder in the first horizontal cell array and a second one of the battery cells is positioned below the board holder in the second horizontal cell array. The first one and the second one have a first axis and a second axis respectively. A first angle is provided by an intersection between the interior horizontal cell array and an imaginary first line extending between the first axis and the second axis. A third one of the battery cells is positioned beside the first one of the battery cells in the first horizontal cell array, and a fourth one of the battery cells is positioned beside the second one of the battery cells in the second horizontal cell array. The third one and the fourth one have a third axis and a fourth axis respectively. A second angle is provided by an intersection between the interior horizontal cell array and an imaginary second line extending between the third axis and the fourth, axis. The first angle is smaller the second angle.

### BRIEF DESCRIPTION OF THE DRAWINGS

In the drawings;
FIG. 1 is a side view of an electric tool having a battery pack according to a first embodiment of the present invention;
FIG. 2 is an exploded perspective view of the battery pack according to the first embodiment;
FIG. 3 is a plan view of the battery pack according to the first embodiment;
FIG. 4 is a partially cut-away front view as viewed from an arrow IV of FIG. 3;
FIG. 5(a) is a cross-sectional side view showing a state where small size battery cells are stored in the battery pack according to the first embodiment;
Fig. 5(b) is a side view showing a separator that packages small size battery cells in the battery pack according to the first embodiment;
FIG. 6 is a cross-sectional side view showing a state where large size battery cells are stored in the battery pack according to the first embodiment;
FIG. 7 is a cross-sectional side view showing a state where small size battery cells are stored in a battery pack according to a second embodiment of the present invention; and,
FIG. 8 is a cross-sectional side view showing a state where large size battery cells are stored in the battery pack according to the second embodiment.

### DETAILED DESCRIPTION

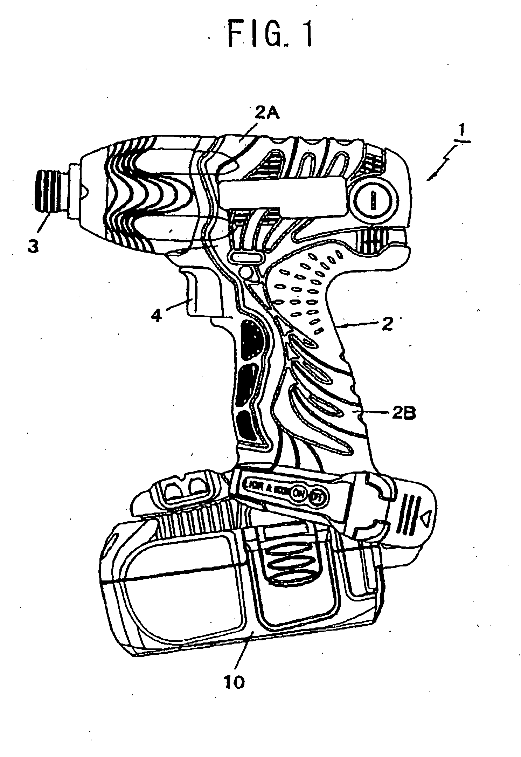

A battery pack for an electric tool according to a first embodiment of the present invention will be described with reference to FIGS. 1 through 6. An electric drill 1 is shown in FIG. 1 as the electric tool. The drill 1 has a housing 2 in generally T-shape configuration and including a main housing 2A and a handle housing 2B. That is, the handle housing 2B extends substantially perpendicularly from the main housing 2A. Throughout the specification, the main housing 2A side will be referred to an upper side and the handle housing 2B side will be referred to as a lower side.

In the main housing 2A, an electric motor (not shown) as a driving source is disposed. A drill chuck 3 is rotatably mounted at one end of the main housing 2A. Throughout the specification, the drill chuck 3 side will be referred to as a front side. Further, a transmission mechanism (not shown) is disposed in the main housing 2A for transmitting rotation of the motor to the drill chuck 3.

A trigger switch 4 is provided on an upper and front portion of the handle housing 2B. Further, a battery pack 10 is detachably mounted at a lower end of the handle housing 2B. That is, the handle housing 2B is formed with a receiving portion (not shown) to receive the battery pack 10. When the trigger switch 4 is turned ON, an electric current is supplied from the battery pack 10 to the electric motor (not shown) to drive the electric motor. The rotation of the electric motor is transmitted via the transmission mechanism (not shown) to the drill chuck 3 so as to rotationally drive a drill bit (not shown) mounted to the drill chuck 3, thereby performing a desired drilling operation.

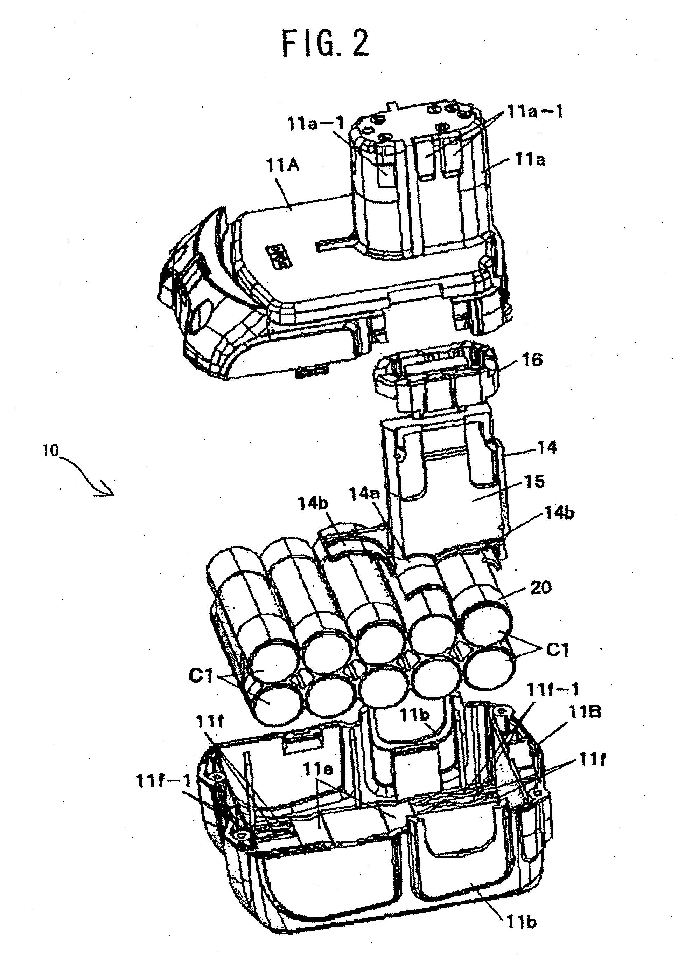

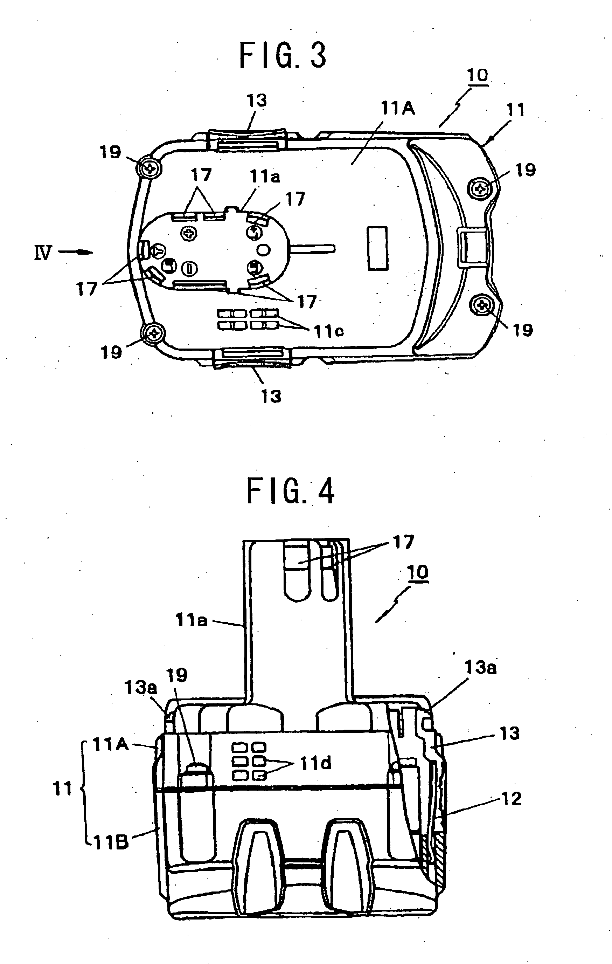

A configuration of the battery pack 10 will be described in detail with reference to FIGS. 2 through 6. As shown in FIG. 2, the battery pack 10 includes a sealed rectangular parallelepiped battery case 11 constructed by an upper case 11A and a lower case 11B those made from a resin. The lower case 11B is in the form of a rectangular box whose upper end is open. A pocket 11b is formed at right and left side walls of the lower case 11B. As shown in FIG. 4, a resilient locking piece 13 and a leaf spring 12. made from a metal are supported in each pocket 11b. The locking piece 13 is biased outward by the leaf spring 12. A snap latch 13a is formed at an upper end of each locking piece 13.

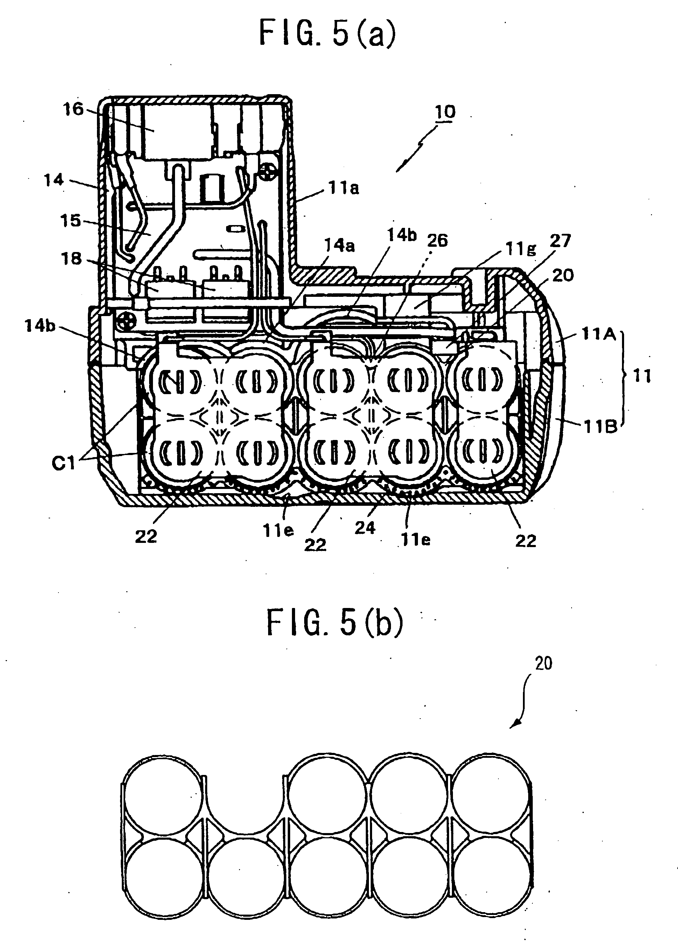

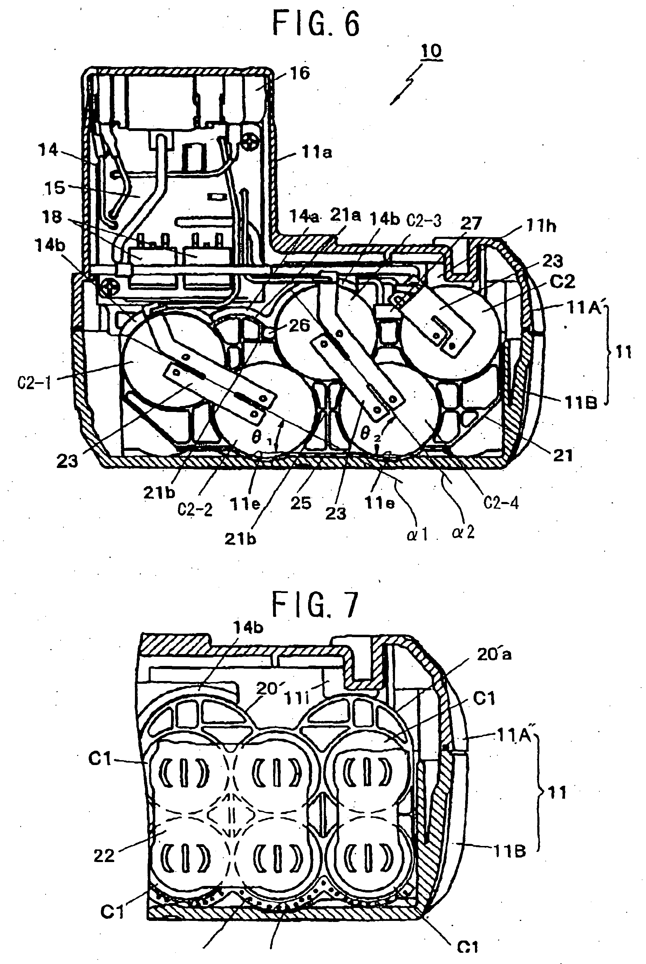

The upper case 11A is adapted for covering the upper end opening of the lower case 11B. The upper case 11A has an upper wall formed with a plurality of vent holes 11c (FIG. 3), and has a side wall formed with a plurality of vent holes 11d (FIG.4). As described later, two kinds of upper cases 11A (FIG. 5(a)) and 11A' (FIG. 6) are prepared. Outer configuration and outer dimension of the upper cases 11A and 11A' is identical to each other. A thermistor 26 and a thermal protector 27 are provided in the upper case 11A, 11A'. The thermister 26 is one of electronic components of a temperature detector for detecting battery temperature during charging. The thermal protector 27 is adapted for shutting off charging circuit for stopping charging in order to avoid overheating to the batteries. That is, the thermal protector 27 is disposed in series in the charging circuit. When the battery temperature becomes abnormally high temperature during charging, a terminal of the thermal protector becomes open to shut off the charging path. If the charging is continued even at the high temperature of the battery due to the breakdown of the thermsiter, etc, the thermal protector 27 is shut off.

A tubular fitting section 11a having an elliptic cross-section integrally extends from the upper wall of the upper case 11A. The fitting section 11a is fittable with the receiving portion of the handle housing 2B. The fitting section 11a has an upper wall formed with a plurality of rectangular openings 11a-1. In the fitting section 11a, a board holder 14 made from a resin is accommodated, and a circuit board 15 is held to the board holder 14 with vertical orientation. Further, an elliptically shaped terminal holder 16 is fitted to an upper end portion of the circuit board 15. A plurality of terminals 17 are supported to the board holder 14, and each terminal 17 is exposed to an atmosphere through each rectangular openings 11a-1 (see also FIG. 3). As shown in FIGS. 5 and 6, the circuit board 15 has electronic components 18 such as FET.

For assembly of the battery case 11, the upper case 11A is put on the lower case 11B from above. Four corners of the upper case 11A are attached and fixed to the lower case 11B by screws 19, thereby providing an internal space. In this space, as shown in FIG. 5(a), ten small size battery cells C1 can be horizontally stored. Alternatively, as shown in FIG. 6, five large size battery cells C2 can be horizontally stored. Here, "horizontally stored" implies that each axis of each battery cell C1 and C2 is directed in the direction substantially parallel to a bottom surface of the battery case 11. The plurality of vent holes 11c serve as cooling air windows 11c for introducing ambient air for cooling into the internal space, and the plurality of vent holes 11d serve as windows for exhausting warm air in the internal space to the atmosphere.

As shown in FIGS. 2 and 5, the ten small size battery cells C1 are laid in a double-decker fashion, and five battery cells C1 are arrayed side by side in a horizontal direction, and each upper and lower batteries C1, C1 are vertically aligned. These battery cells C1 are held and packaged by a separator 20 made from a resin.

As shown in FIG. 6, regarding five large size battery cells C2, three cells are arranged in an upper stage or tier and two cells are arranged in a lower stage or tier. These battery cells C2 are held and packaged by another separator 21 made from a resin. The separator 21 includes an arcuate convex part 21a and a horizontally extending rib 21b those described later.

As shown in FIGS. 2, 5 and 6, at the lower end portion of the board holder 14, a first battery cell retainer 14a and a pair of second battery cell retainers 14b are provided. The first battery cell retainer 14a is positioned between the pair of second battery cell retainers 14b. The first battery cell retainer 14a has an arcuate recess whose radius is coincident with a radius of the small size battery cell C1. The pair of second battery cell retainers 14b have arcuate recesses whose radius is coincident with a radius of the large size battery cell C2.

As shown in FIGS. 2 and 6, in the inner surface of the bottom wall of the lower case 11B, two arcuate recesses 11e extend in an axial direction of the battery cells and are spaced away from each other in the frontward/rearward direction of the electric tool 1. Each arcuate recess 11e has a radius coincident with the radius of the large size battery cells C2.

As shown in FIG. 2, two rows of ribs 11f protrude from the inner surface of the bottom wall of the lower case 11B. Each two rows of ribs 11f is positioned at each widthwise end of the bottom wall and positioned close to the arcuate recess 11e. Each ribs 11f is formed with an arcuate recess 11f-1 whose radius is coincident with the radius of the small size battery cell C1. A cushion member 24 (FIG.5 (a)) or 25 (FIG.6) is provided immediately above the bottom wall of the lower case 11B.

According to the present embodiment, two kinds of upper cases 11A and 11A' are prepared. That is, the upper case 11A shown in FIGS. 1 through 5 is adapted for accommodating the small size battery cells C1, and the upper case 11A' shown in FIG. 6 is adapted for accommodating the large size battery cells C2. In the upper case 11A shown in FIG. 5(a), a fitting protrusion 11g protrudes downward from the upper wall for fitting with an outer peripheral part of the small size battery cell C1. In the upper case 11A' shown in FIG. 6, a fitting protrusion 11h protrudes downward from the upper wall for fitting with an outer peripheral part of the large size battery cell C2.

Incidentally, the small size battery cells C1 are lithium ion battery cells with a voltage of 3.6 V and a capacity of 1.5 Ah. Two lithium ion battery cells are connected in parallel to each other by a conductive plate 22. When a pair of parallelly connected battery cells C1 is connected together in series, a power output of 18 V and 3.0 Ah is obtained. The large size battery cells C2 are lithium ion batteries with a voltage of 3.6 V and a capacity of 3.0 Ah. These lithium ion battery cells are connected in series by a conductive plate 23, so that a power output of 18 V and 3.0 Ah is obtained.

With this arrangement, the ten small size battery cells C1 packaged by the separator 20 are stored in position in the battery case 11 as shown in FIG. 5(a). The cushion member 24 is provided between the battery cells C1 and the inner bottom portion of the lower case 11B. In this case, one of the second battery cell retainers 14b holds the upper leftmost battery cell C1 and the first battery cell retainer 14a holds the upper battery cell C1 neighboring the leftmost battery cell. Further, the fitting protrusion 11g of the upper case 11A fits onto the upper tier battery cell C1 neighboring the rightmost battery cell. Moreover, the lower battery cell neighboring the rightmost battery cell is retained by_the recess 11e formed in the inner bottom portion of the lower case 11B through the cushion member 24. Furthermore, the lower leftmost and rightmost battery cells C1, are fitted with the recesses 11f-1 of the ribs 11f of the lower case 11B through the cushion member 24.

Consequently, the ten small size battery cells C1 packaged by the separator 20 are fitted with and held by the cell retainers 14a and 14b of the board holder 14, the fitting protrusion 11g of the upper case 11A, and the recess 11e of the lower case 11B, whereby the battery cells C1 are stored in stable position in the battery case 11.

On the other hand, the five large size battery cells C2 packaged by the separator 21 are stored in position in the battery case 11 as shown in FIG. 6. The cushion member 25 is provided between the battery cells C2 and the inner bottom portion of the lower case 11B. In this case, the second battery retainers 14b of the board holder 14 fit with the outer peripheral parts of the leftmost and center battery cells C2 on the upper tier in FIG. 6. The arcuate convex part 21a of the separator 21 fits with the first battery retainer 14a of the board holder 14. The fitting protrusion 11h of the upper case 11A' fits with the rightmost battery cell C2 at the upper tier. Further, two battery cells C2 in the lower tier fit via the cushion member 25 with the recess 11e formed in the inner bottom portion of the lower case 11B.

Consequently, the five large size battery cells C2 packaged by the separator 21 are fitted with or held by the first and second battery retainers 14a and 14b of the board holder 14, the fitting protrusion 11h of the upper case 11A' and the recess 11e of the lower case 11B. Thus, the battery cells C2 are stably stored in position in the battery case 11.

As shown in FIG. 6, the large size battery cells C2-1, C2-2 positioned below the circuit board 15 provide an angle θ1 which is an intersection angle between a line α1 and the bottom surface of the lower case 11B, in which the line α1 is a connection line between a center of the upper leftmost battery cell C2-1 and a center of the lower leftmost battery cell C2-2. Further, the battery cell C2-3 centrally positioned in the upper tier and the right side battery cell C2-4 at the lower tier provide an angle θ2 which is an intersection angle between a line α2 and the bottom surface of the lower case 11B, in which the line α2 is a connection line between a center of the upper intermediate battery cell C2-3 and a center of the lower right battery cell C2-4. Here, the angle θ1 is smaller than the angle θ2. That is, two large size battery cells C2-1, C2-2 of the upper and lower two tiers arranged below the circuit board 15 in the battery case 11 are stored more inclined toward a horizontal direction than the other large size battery cells C2-3, C2-4 of the upper and lower two tiers. With this arrangement, a height of the battery cell C2-1 can be reduced. As a result, the height of the battery case 11 can be reduced, realizing a small-sized and compact battery pack 10.

Moreover, as shown in FIG. 6, the ribs 21b of the separator 21 functions to maintain a distance between horizontally adjacent two battery cells C2-1 and C2-3, and between horizontally adjacent two battery cells C2-2 and C2-4. The rib 21b extends substantially parallel to a straight line connecting the centers of two horizontally adjacent battery cells C2-1 and C2-3.

Thus, in this manner, when the fitting section 11a of the battery pack 10 is fitted into the receiving portion of the handle housing 2B, the latches 13a of the left and right locking pieces 13 are locked in a groove (not shown) formed in the receiving portion, thereby installing the battery pack 10 to the handle housing 2B. Since the battery pack 10 stores ten small size battery cells C1 or the five large size battery cells C2, electric power can be supplied from the battery pack 10 to the electric motor.

As described above, in the depicted embodiment, both the small size battery cells C1 and the large size battery cells C2 can be stored irrespective of using the identical lower case 11B and the board holder 14. Accordingly, battery cells C1 or C2 of a desired size can be selectively used.

Moreover, the large size battery cells C2 of the upper and lower two tiers arranged below the circuit board 15 in the battery case 11 are arranged more inclined toward a horizontal direction than the other large size battery cells C2 of the upper and lower two tiers, thereby reducing the height thereof. As a result, the height of the battery case 11 can be reduced, realizing a small-sized and compact battery pack 10.

Further, both the small size battery cells C1 and the large size battery cells C2 are fitted with and held to the recesses of the first and second retainers 14a and 14b of the board holder 14, the fitting protrusions 11g and 11h of the upper case 11A and the recess 11e of the lower case 11B. Accordingly, the battery cells C1 and C2 can be stably stored in given position in the battery case 11. As a result, movement of the battery cells C1 and C2 in the battery case 11 due to the vibrations of the body of the electric tool 1 can be prevented. Particularly, in the present embodiment, the rigidity of the separator 21 for holding the large size battery cells C2 can be enhanced by the rib 21b, thereby reliably preventing the relative movement between the battery cells C2 due to the vibrations of the tool body, and preventing a damage to the conductive plate 23 which electrically connects adjacent battery cells C2 to each other. Since the rib 21b extends substantially parallel to a straight line connecting the centers of two horizontally adjacent battery cells C2, the relative movement of the battery cells C2 can be reliably prevented.

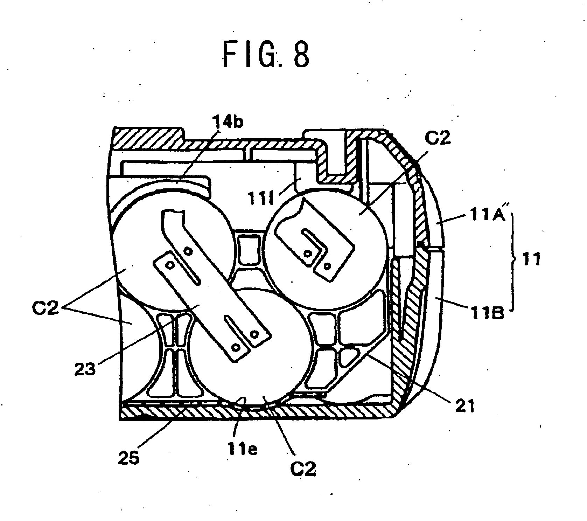

A battery pack according to a second embodiment of the present invention will be described with reference to FIGS. 7 and 8. FIG. 7 shows a state of a battery pack where small size battery cells are stored, and FIG. 8 shows a state of a battery pack where large size battery cells are stored. In these figures, like parts and components are designated by the same reference numerals as those shown in FIGS. 1 through 6 to avoid duplicating description.

In the second embodiment, there is formed in the upper case 11A" a fitting protrusion 11i selectively fittable with a semicircular convex 20a' as shown in FIG. 7 or an outer peripheral part of the large size battery cell C2 as shown in FIG. 8. The semicircular convex 20a' is a part of a separator 20' that holds the small size battery cells C1. The other configurations are the same as those of the first embodiment.

In the second embodiment, since the fitting protrusion 11i is fittable with either the outer peripheral surface of the large size battery cells C2 or the separator 20' for holding the small size battery cells C1. Therefore, an upper case 11A" as well as the lower case 11B are commonly available for both the small size battery cells C1 and the large size battery cells C2. Thus, the battery pack can be manufactured at lower cost.

While the invention has been described in detail and with reference to the specific embodiment thereof, it would be apparent to those skilled in the art that various changes and modifications may be made without departing from the scope of the invention. For example, in the above-described embodiment, the battery case is composed of complementary upper and lower cases. However, the battery case can be divided into left case and right case. Moreover, in the above embodiment, first and second retainers 14a, 14b those formed with recesses are provided to the board holder for holding the battery cells. Instead of the recess, the first and second retainers can be provided with convex portions for holding the battery cells.

## Claims

1. A battery pack for use in combination with an electric tool having a tool body, the battery pack being detachably attached to the tool body and comprising:
a first case;
a complementary second case to provide a battery case in combination with the first case, the battery case defining an upper space and a battery cell accommodation space below the upper space;
a separator disposed in the battery cell accommodation space to package a plurality of battery cells in a form of at least a first horizontal cell array and a second horizontal cell array stacked on the first horizontal cell array;
and
a board holder holding a circuit board and disposed in the upper space, the board holder having a first retainer capable of fitting with an outer peripheral part of a small size battery cell and a second retainer capable of fitting with an outer peripheral part of a large size battery cell.

2. The battery pack as claimed in claim 1, wherein the board holder has a lower end to which the first retainer and the second retainer are provided, the first retainer and the second retainer being exposed to the battery cell accommodation space.

3. The battery pack as claimed in claim 1, wherein the small size battery cell has a first radius, and the large size battery cell has a second radius different from the first radius; and
wherein the first retainer has a first arcuate shape whose radius is coincident with the first radius, and the second retainer has a second arcuate shape whose radius is coincident with the second radius.

4. The battery pack as claimed in claim 1, wherein the battery case has an interior horizontal bottom surface defining a part of the battery cell accommodation space; and
wherein the first horizontal cell array and the second horizontal cell array are provided by a plurality of the large size battery cells, first one of the large size battery cells positioned below the board holder in the first horizontal cell array and second one of the large size battery cells positioned below the board holder in the second horizontal cell array having a first axis and a second axis respectively, a first angle being provided by an intersection between the interior horizontal cell array and an imaginary first line extending between the first axis and the second axis;
a third one of the large size battery cells being positioned beside the first one of the large size battery cells in the first horizontal cell array, and a fourth one of the large size battery cells being positioned beside the second one of the large size battery cells in the second horizontal cell array, the third one of the large size battery cellos and the fourth one of the large size battery cells having a third axis and a fourth axis respectively, a second angle being provided by an intersection between the interior horizontal cell array and an imaginary second line extending between the third axis and the fourth axis, the first angle being smaller the second angle.

5. The battery pack as claimed in claim 1, wherein the first case has a protrusion fitted with a part of the separator.

6. The battery pack as claimed in claim 1, wherein the separator has a rib that maintains a horizontal distance between neighboring battery cells in an identical horizontal cell array.

7. The battery pack as claimed in claim 6, wherein the rib extends in a direction substantially parallel to an imaginary line extending between an axis of the battery cell and an axis of a neighboring battery cell in the identical horizontal cell array.

8. A battery pack for use in combination with an electric tool having a tool body, the battery pack being detachably attached to the tool body and comprising:
a first case;
a complementary second case to provide a battery case in combination with the first case, the battery case defining an upper space and a battery cell accommodation space below the upper space;
a separator disposed in the battery cell accommodation space to package a plurality of battery cells in a form of at least a first horizontal cell array and a second horizontal cell array stacked on the first horizontal cell array; and
a board holder holding a circuit board and disposed in the upper space;
wherein the battery case has an interior horizontal bottom surface defining a part of the battery cell accommodation space;
wherein, a first one of the battery cells positioned below the board holder in the first horizontal cell array and second one of the battery cells positioned below the board holder in the second horizontal cell array have a first axis and a second axis respectively, a first angle being provided by an intersection between the interior horizontal cell array and an imaginary first line extending between the first axis and the second axis;
wherein a third one of the battery cells is positioned beside the first one of the battery cells in the first horizontal cell array, and a fourth one of the battery cells being positioned beside the second one of the battery cells in the second horizontal cell array, the third one of the battery cells and the fourth one of the battery cells having a third axis and a fourth axis respectively, a second angle being provided by an intersection between the interior horizontal cell array and an imaginary second line extending between the third axis and the fourth axis, the first angle being smaller the second angle.

9. The battery pack as claimed in claim 8, wherein the first case has a protrusion fitted with a part of the separator.

10. The battery pack as claimed in claim 8, wherein the separator has a rib that maintains a horizontal distance between neighboring battery cells in an identical horizontal cell array.

11. The battery pack as claimed in claim 10, wherein the rib extends in a direction substantially parallel to an imaginary line extending between an axis of the battery cell and an axis of a neighboring battery cell in the identical horizontal cell array.

## Patentansprüche

1. Batteriepack zur Nutzung in Kombination mit einem Elektrowerkzeug, das einen Werkzeugkörper hat, wobei das Batteriepack lösbar an dem Werkzeugkörper befestigt ist und umfasst:
ein erstes Gehäuse;
ein komplementäres zweites Gehäuse, das in Kombination mit dem ersten Gehäuse ein Batteriegehäuse bildet, wobei das Batteriegehäuse einen oberen Raum und einen darunterliegenden Batteriezellenaufnahmeraum definiert;
ein Trennelement, das in dem Batteriezellenaufnahmeraum angeordnet ist, um eine Mehrzahl von Batteriezellen in Form von mindestens einem ersten horizontalen Zellenarray und einem darauf gestapelten zweiten horizontalen Zellenarray zu packen; und
einen Platinenhalter, der eine Leiterplatine hält und im oberen Raum angeordnet ist, wobei der Platinenhalter eine an einen Umfangsteil einer kleinen Batteriezelle angepasste erste Halterung und eine an einen Umfangsteil einer großen Batteriezelle angepasste zweite Halterung aufweist.

2. Batteriepack nach Anspruch 1, wobei der Platinenhalter ein unteres Ende hat, an dem die erste und die zweite Halterung vorgesehen sind, wobei diese gegenüber dem Batteriezellenaufnahmeraum freiliegen.

3. Batteriepack nach Anspruch 1, wobei die kleine Batteriezelle einen ersten Radius und die zweite Batteriezelle einen von diesem verschiedenen zweiten Radius hat; und
wobei die erste Halterung eine erste Bogenform hat, deren Radius mit dem ersten Radius übereinstimmt, und die zweite Halterung eine zweite Bogenform hat, deren Radius mit dem zweiten Radius übereinstimmt.

4. Batteriepack nach Anspruch 1, wobei das Batteriegehäuse eine innere horizontale Bodenfläche hat, die einen Teil des Batteriezellenaufnahmeraums definiert; und
wobei das erste und das zweite horizontale Zellenarray durch eine Mehrzahl von großen Batteriezellen gebildet sind,
wobei eine unter dem Platinenhalter im ersten horizontalen Zellenarray positionierte erste und eine unter dem Platinenhalter im zweiten horizontalen Zellenarray positionierte zweite der großen Batteriezellen eine erste beziehungsweise eine zweite Achse haben, wobei ein erster Winkel am Schnittpunkt zwischen dem inneren horizontalen Zellenarray und einer zwischen der ersten und der zweiten Achse verlaufenden imaginären ersten Geraden gebildet ist;
wobei eine dritte der großen Batteriezellen neben der ersten der großen Batteriezellen im ersten horizontalen Zellenarray positioniert ist, und wobei eine vierte der großen Batteriezellen neben der zweiten der großen Batteriezellen im zweiten horizontalen Zellenarray positioniert ist, wobei die dritte und die vierte der großen Batteriezellen eine dritte, beziehungsweise vierte Achse haben, wobei ein zweiter Winkel am Schnittpunkt zwischen dem inneren horizontalen Zellenarray und einer zwischen der dritten und der vierten Achse verlaufenden zweiten imaginären Geraden gebildet ist, wobei der erste Winkel kleiner als der zweite Winkel ist.

5. Batteriepack nach Anspruch 1, wobei das erste Gehäuse einen mit einem Teil der Trenneinrichtung bestückten Vorsprung hat.

6. Batteriepack nach Anspruch 1, wobei die Trenneinrichtung eine Rippe hat, die einen horizontalen Abstand zwischen benachbarten Batteriezellen desselben horizontalen Zellenarrays hält.

7. Batteriepack nach Anspruch 6, wobei die Rippe in einer Richtung verläuft, die im Wesentlichen parallel zu einer zwischen einer Achse der Batteriezelle und einer Achse einer benachbarten Batteriezelle des gleichen horizontalen Zellenarrays verlaufenden imaginären Geraden verläuft.

8. Batteriepack zur Nutzung in Kombination mit einem Elektrowerkzeug, das einen Werkzeugkörper hat, wobei das Batteriepack lösbar an dem Werkzeugkörper befestigt ist und umfasst:
ein erstes Gehäuse;
ein komplementäres zweites Gehäuse, das in Kombination mit dem ersten Gehäuse ein Batteriegehäuse bildet, wobei das Batteriegehäuse einen oberen Raum und darunterliegenden Batteriezellenaufnahmeraum definiert;
ein Trennelement, das in dem Batteriezellenaufnahmeraum angeordnet ist, um eine Mehrzahl von Batteriezellen in Form von mindestens einem ersten horizontalen Zellenarray und einem, darauf gestapelten zweiten horizontalen Zellenarray zu packen; und
einen Platinenhalter, der eine Leiterplatine hält und im oberen Raum angeordnet ist;
wobei das Batteriegehäuse eine innere horizontale Bodenfläche hat, die einen Teil des Batteriezellenaufnahmeraums definiert;
wobei eine unter dem Platinenhalter im ersten horizontalen Zellenarray positionierte erste und die unter dem Platinenhalter im zweiten horizontalen Zellenarray positionierte zweite der Batteriezellen eine erste beziehungsweise eine zweite Achse haben, wobei ein erster Winkel am Schnittpunkt zwischen dem inneren horizontalen Zellenarray und einer zwischen der ersten Achse und der zweiten Achse verlaufenden imaginären ersten Geraden gebildet ist;
wobei eine dritte der Batteriezellen neben der ersten der Batteriezellen im ersten horizontalen Zellenarray positioniert ist, und wobei eine vierte der Batteriezellen neben der zweiten der Batteriezellen im zweiten horizontalen Zellenarray positioniert ist, wobei die dritte und die vierte der großen Batteriezellen eine dritte, beziehungsweise eine vierte Achse haben, wobei ein zweiter Winkel am Schnittpunkt zwischen dem inneren horizontalen Zellenarray und einer durch die dritte und die vierte Achse verlaufenden zweiten imaginären Geraden gebildet ist, wobei der erste Winkel kleiner als der zweite Winkel ist.

9. Batteriepack nach Anspruch 8, wobei das erste Gehäuse einen mit einem Teil der Trenneinrichtung bestückten Vorsprung hat.

10. Batteriepack nach Anspruch 8, wobei die Trenneinrichtung eine Rippe hat, die einen horizontalen Abstand zwischen benachbarten Batteriezellen desselben horizontalen Zellenarrays aufrecht hält.

11. Batteriepack nach Anspruch 10, wobei die Rippe in einer Richtung verläuft, die im Wesentlichen parallel zu einer zwischen einer Achse der Batteriezelle und einer Achse einer benachbarten Batteriezelle des gleichen horizontalen Zellenarrays verlaufenden imaginären Geraden ist.

## Revendications

1. Bloc-batteries à utiliser en combinaison avec un outil électrique ayant un corps d'outil, le bloc-batteries étant fixé de manière amovible au corps de l'outil et comportant :
un premier boîtier,
un second boîtier complémentaire pour fournir un boîtier de batterie en combinaison avec le premier boîtier, le boîtier de batterie définissant un espace supérieur et un espace de logement d'éléments de batterie au-dessous de l'espace supérieur,
un séparateur disposé dans l'espace de logement d'éléments de batterie pour mettre sous boîtier une pluralité d'éléments de batterie sous la forme d'au moins une première rangée d'éléments horizontaux et une seconde rangée d'éléments horizontaux sur la première rangée d'éléments horizontaux, et
un support de carte contenant une carte de circuit imprimé et disposé dans l'espace supérieur, le support de carte ayant un premier dispositif de retenue pouvant s'ajuster à une partie périphérique extérieure d'un élément de batterie de petite taille et un second dispositif de retenue pouvant s'ajuster à une partie périphérique extérieure d'un élément de batterie de grande taille.

2. Bloc-batteries selon la revendication 1,
dans lequel le support de carte a une extrémité inférieure dans laquelle le premier dispositif de retenue et le second dispositif de retenue sont agencés, le premier dispositif de retenue et le second dispositif de retenue étant exposés à l'espace de logement d'éléments de batterie.

3. Bloc-batteries selon la revendication 1,
dans lequel l'élément de batterie de petite taille a un premier rayon, et l'élément de batterie de grande taille a un second rayon différent du premier rayon, et
dans lequel le premier dispositif de retenue a une première forme courbe dont le rayon coïncide avec le premier rayon, et le second dispositif de retenue a une seconde forme courbe dont le rayon coïncide avec le second rayon.

4. Bloc-batteries selon la revendication 1,
dans lequel le boîtier de batterie a une surface inférieure horizontale intérieure définissant une partie de l'espace de logement d'éléments de batterie, et
dans lequel la première rangée d'éléments horizontaux et la seconde rangée d'éléments horizontaux contiennent une pluralité des éléments de batterie de grande taille, le premier des éléments de batterie de grande taille étant positionné au-dessous du support de carte dans la première rangée d'éléments horizontaux et le deuxième des éléments de batterie de grande taille étant positionné au-dessous du support de carte dans la seconde rangée d'éléments horizontaux ayant un premier axe et un deuxième axe respectivement, un premier angle étant fourni par une intersection entre la rangée d'éléments horizontaux intérieurs et une première ligne imaginaire s'étendant entre le premier axe et le deuxième axe,
un troisième des éléments de batterie de grande taille étant positionné au-dessous du premier des éléments de batterie de grande taille dans une première rangée d'éléments horizontaux, et un quatrième des éléments de batterie de grande taille étant positionné au-dessous du deuxième des éléments de batterie de grande taille dans la seconde rangée d'éléments horizontaux, le troisième des éléments de batterie de grande taille et le quatrième des éléments de batterie de grande taille ayant un troisième axe et un quatrième axe respectivement, un second angle étant fourni par une intersection entre la rangée d'éléments horizontaux intérieurs et une seconde ligne imaginaire s'étendant entre le troisième et le quatrième axe, le premier angle étant plus petit que le second angle.

5. Bloc-batteries selon la revendication 1,
dans lequel le premier boîtier a une saillie ajustée avec une partie du séparateur.

6. Bloc-batteries selon la revendication 1,
dans lequel le séparateur a une nervure qui maintient une distance horizontale entre des éléments de batterie voisins dans une rangée d'éléments horizontaux.

7. Bloc-batteries selon la revendication 6,
dans lequel la nervure s'étend dans une direction sensiblement parallèle à une ligne imaginaire s'étendant entre un axe de l'élément de batterie et un axe d'un élément de batterie voisin dans la rangée d'éléments horizontaux identiques.

8. Bloc-batteries à utiliser en combinaison avec un outil électrique ayant un corps d'outil, le bloc-batteries étant fixé de manière amovible au corps de l'outil et comportant :
un premier boîtier,
un second boîtier complémentaire pour fournir un boîtier de batterie en combinaison avec le premier boîtier, le boîtier de batterie définissant un espace supérieur et un espace de logement d'éléments de batterie au-dessous de l'espace supérieur,
un séparateur disposé dans l'espace de logement d'éléments de batterie pour mettre sous boîtier une pluralité d'éléments de batterie sous la forme d'au moins une première rangée d'éléments horizontaux et une seconde rangée d'éléments horizontaux empilés sur la première rangée d'éléments horizontaux, et
un support de carte contenant une carte de circuit imprimé et disposé dans l'espace supérieur,
dans lequel le boîtier de batterie a une surface inférieure horizontale intérieure définissant une partie de l'espace de logement d'éléments de batterie,
dans lequel un premier des éléments de batterie positionné au-dessous du support de carte dans la première rangée d'éléments horizontaux et un deuxième des éléments de batterie positionné au-dessous du support de carte dans la seconde rangée d'éléments horizontaux ont un premier axe et un deuxième axe respectivement, un premier angle étant fourni par une intersection entre la rangée d'éléments horizontaux intérieurs et une première ligne imaginaire s'étendant entre le premier axe et le deuxième axe,
dans lequel un troisième des éléments de batterie est positionné au-dessous du premier des éléments de batterie dans la première rangée d'éléments horizontaux, et un quatrième des éléments de batterie est positionné au-dessous du deuxième des éléments de batterie dans la seconde rangée d'éléments horizontaux, le troisième des éléments de batterie et le quatrième des éléments de batterie ayant un troisième axe et un quatrième axe respectivement, un second angle étant fourni par une intersection entre la rangée d'éléments horizontaux intérieurs et une seconde ligne imaginaire s'étendant entre le troisième et le quatrième axe, le premier angle étant plus petit que le second angle.

9. Bloc-batteries selon la revendication 8,
dans lequel le premier boîtier a une saillie ajustée avec une partie du séparateur.

10. Bloc-batteries selon la revendication 8,
dans lequel le séparateur a une nervure qui maintient une distance horizontale entre des éléments de batterie voisins dans une rangée d'éléments horizontaux identiques.

11. Bloc-batteries selon la revendication 10,
dans lequel la nervure s'étend dans une direction sensiblement parallèle à une ligne imaginaire s'étendant entre un axe de l'élément de batterie et un axe d'un élément de batterie voisin dans la rangée d'éléments horizontaux identiques.
